Europäisches Patentamt

European Patent Office

Office européen des brevets

(19)

(11)  EP 1 513 165 A1

## (12)  EUROPEAN PATENT APPLICATION

(43) Date of publication:
    09.03.2005  Bulletin 2005/10

(51) Int Cl.7: **H01B 3/12**, H01G 4/12,
    C04B 35/468, C04B 41/50,
    C01G 23/00

(21) Application number: 04020931.4

(22) Date of filing: 02.09.2004

(84) Designated Contracting States:
    **AT BE BG CH CY CZ DE DK EE ES FI FR GB GR
    HU IE IT LI LU MC NL PL PT RO SE SI SK TR**
    Designated Extension States:
    **AL HR LT LV MK**

(30) Priority: 03.09.2003 JP 2003311900
            03.09.2003 JP 2003311901
            03.09.2003 JP 2003311902

(71) Applicant: **JSR Corporation
    Tokyo (JP)**

(72) Inventors:
    • **Yamada, Kinji
      Tokyo (JP)**
    • **Shinoda, Tomotaka
      Tokyo (JP)**

(74) Representative:
    **Leson, Thomas Johannes Alois, Dipl.-Ing.
    Tiedtke-Bühling-Kinne & Partner GbR,
    TBK-Patent,
    Bavariaring 4
    80336 München (DE)**

(54)  **Dielectric-forming composition containing particles with perovskite crystal structure, production process and uses of the same, and process for preparing crystal particles having perovskite crystal structure**

(57)    A  dielectric-forming  composition  includes ABOx crystal particles 100 nm or less in mean particle diameter comprising specific metal species, and an organic solvent, and the composition satisfies at least one of the following conditions:

   (i) the concentration of the metal species A in the liquid phase is 1 mol% or less; and
   (ii) the water concentration in the composition is 1 wt% or less.

   A process for producing ABOx crystal particles 100 nm or less in mean particle diameter comprising specific metal species, the process includes (I) a dissolution step in which a specific organometallic compound having the metal species A and a specific organometallic compound having the metal species B are dissolved in an organic solvent; (II) a hydrolysis step in which water is added to the solution prepared in the dissolution step to perform hydrolysis of a precursor in the solution to form crystal particles; and (III) a purification step in which the crystal particles obtained in the hydrolysis step are purified with an organic solvent.

Printed by Jouve, 75001 PARIS (FR)

Description

FIELD OF THE INVENTION

The present invention relates to a dielectric-forming composition containing particles with a perovskite crystal structure, and a production process and uses of the composition. The invention also relates to a process for preparing crystal particles having a perovskite crystal structure.

BACKGROUND OF THE INVENTION

Devices in the field of information industry such as cellular phones will be increasingly required to be of higher speed, higher capacity and smaller size. Therefore, the industry has been vigorously working on extensive research and development of advanced devices meeting the requirements. In particular, dielectric materials having an ABOx (wherein x is 2.5 to 3.5, preferably 3; perovskite) crystal structure such as barium titanate, barium strontium titanate and lead zirconate titanate, are widely used in the field of electronic devices including capacitors and memory devices. Miniaturization and upgrading of the electronic devices have an indispensable task of thickness reduction of elements, which crucially depends on establishment of a production process for dielectric thin films having higher functions and quality.

Currently, such thin films are generally manufactured by PVD (physical vapor deposition) such as sputtering, gas-phase processes such as chemical vapor deposition using organometallic compounds, and liquid-phase processes represented by sol-gel processing.

In the case of the lead zirconate titanate for example, it is relatively easy to obtain a crystalline thin film having good dielectric properties either by the gas-phase process or by the liquid-phase process. On the other hand, a production process of dielectric thin films has not been developed to a practical level for the barium titanate and barium strontium titanate, although a few synthesis cases by the gas-phase process or sol-gel processing have been reported.

From the viewpoints of easy control of composition and shaping and also production costs, the liquid-phase process is considered more advantageous than the gas-phase process for the synthesis of thin films from the barium titanate or barium strontium titanate; therefore synthesis of thin films by the sol-gel processing or coating-pyrolysis process has been intensively studied. The sol-gel processing is a synthesis process in which a metal alkoxide sol (precursor solution) as starting material is hydrolyzed and polycondensed to form a gel, and eventually the gel is heated to give a metal oxide. As compared with PVD or the gas-phase process for forming thin films, the sol-gel processing has advantages that a substrate for a thin film is relatively free from limitations of shape and size, and that no costly apparatus is needed.

In the recent electronic devices industry, development of a technology has been expected for forming a dielectric thin film on a low heat resistance substrate such as glass or a resin. However, the conventional production of thin films by the sol-gel processing necessarily involves calcination at 500°C or above in order to convert the amorphous oxide spread on the substrate to the ABOx crystal structure. Accordingly, it is difficult to apply this method to a substrate having low heat resistance.

For example, when an amorphous coating layer is formed on a substrate by spin-coating or dip-coating with a precursor solution containing Ba, Sr and Ti, crystallization of the coating layer requires calcination at high temperatures of 500°C or above. However, such high temperature calcination often results in deterioration or deformation of the substrate and brings about reaction at the interface between the substrate and the thin coating layer. Thus, substrate materials have many limitations.

Accordingly, an innovative technology has been demanded that enables production of thin films by the liquid-phase process at lower temperatures.

The present invention has been made in view of the aforesaid circumstances. JP-A-H09-157008, a closely related reference to the present invention, discloses a process for producing a high dielectric constant film by application of a composition comprising Ba carboxilate, Sr carboxilate and Ti alkoxide. However, this process requires calcination at 550°C for crystallization and cannot be used for a substrate poor in heat resistance.

Meanwhile, JP-A-2001-026421 discloses a low temperature production process wherein a solution of partially hydrolyzed Ba and Ti alkoxides is applied on a substrate and thereafter exposed to vapor to form a crystalline $BaTiO_3$ thin film. However, this process requires cooling of the substrate to a liquid nitrogen temperature and prolonged aging of the coating film formed. Moreover, the reference does not describe electric properties of the crystalline film obtained.

Furthermore, JP-A-2002-275390 discloses a production process of thin films which employs a crystalline gel containing crystal particles that is obtained by hydrolysis of an alkoxide of Ba, Ti or the like. However, the process in which calcination is performed at 450°C produces a dielectric film having a high dielectric loss. In practice, the calcination has to be carried out at 750°C or above.

DISCLOSURE OF THE INVENTION

PROBLEMS TO BE SOLVED BY THE INVENTION

The present invention has been made in view of the aforesaid circumstances.

A first object of the present invention is to provide a dielectric-forming composition capable of forming a dielectric film having an ABOx crystal structure at a lower processing temperature and in a reduced time to enable drastic enhancement of productivity, a production process thereof, a dielectric film from the composition, and a capacitor including the dielectric film.

A second object of the present invention is to provide a process for producing crystal particles having an ABOx crystal structure and a mean particle diameter of 100 nm or less, namely, a production process of ABOx crystal particles 100 nm or less in mean particle diameter that can form a dielectric film by lower temperature calcination.

MEANS FOR SOLVING THE PROBLEMS

A dielectric-forming composition according to the present invention comprises ABOx crystal particles 100 nm or less in mean particle diameter and an organic solvent, which particles comprise one or more metal species A selected from Li, Na, Ca, Sr, Ba and La, and one or more metal species B selected from Ti, Zr, Ta and Nb, the composition satisfying at least one of the following conditions:

> (i) the concentration of the metal species A in the liquid phase is 1 mol% or less; and
> (ii) the water concentration in the composition is 1 wt% or less.

As used herein, the mean particle diameter is a so-called median diameter which is a medium value of frequencies in a particle size distribution.

The metal species A concentration in the liquid phase is defined as a value calculated from measurement results by the steps (A) to (D):

> (A) $\alpha$ mol of ABOx crystal particles 100 nm or less in mean particle diameter is added to methyl cellosolve so as to achieve a concentration of 5 wt%, and the particles are dispersed by stirring or ultrasonic application;
> (B) the particle dispersion obtained in (A) is centrifuged at 15000 rpm for 1 hour thereby to sediment the particles, and the supernatant liquid is separated;
> (C) the supernatant liquid separated in (B) is analyzed by ICP-MS (inductively coupled plasma mass spectrometer) to determine the amount ($\beta$ mol) of the metal species A and the amount ($\gamma$ mol) of the metal species B; and
> (D) the amounts of the metal species A and B determined in (C) are put in the following equation to calculate the metal species A concentration in the liquid phase:

Metal species A concentration (mol%) = $(\beta - \gamma)/\alpha \times 100$

The water concentration in the composition may be determined by Karl Fischer coulometric titration.

The dielectric-forming composition suitably satisfies either the condition (i) or (ii), and preferably satisfies both the conditions (i) and (ii).

A dielectric film according to the present invention is formed from the dielectric-forming composition described above.

A capacitor according to the present invention includes the dielectric film formed from the dielectric-forming composition described above.

A process for producing a dielectric-forming composition according to the present invention produces a dielectric-forming composition comprising ABOx crystal particles 100 nm or less in mean particle diameter and an organic solvent, which particles comprise one or more metal species A selected from Li, Na, Ca, Sr, Ba and La, and one or more metal species B selected from Ti, Zr, Ta and Nb, and which composition satisfies at least one of the aforesaid conditions (i) and (ii), the process comprising the steps of:

> purifying ABOx crystal particles 100 nm or less in mean particle diameter with an organic solvent (a); and
> separating the purified particles from the organic solvent (a) and dispersing the particles in an organic solvent (b).

In the production process of a dielectric-forming composition, a nonionic surfactant is preferably added when the purified particles are dispersed in the organic solvent (b).

A process for producing crystal particles according to the present invention produces ABOx crystal particles 100 nm or less in mean particle diameter comprising one or more metal species A selected from Li, Na, Ca, Sr, Ba and La, and one or more metal species B selected from Ti, Zr, Ta and Nb, the process comprising:

> (I) a dissolution step in which at least one kind selected from metal alkoxides, metal carboxylates and metal complexes, these having the metal species A that constitutes the crystal particles, and at least one kind selected from metal alkoxides, metal carboxylates and metal complexes, these having the metal species B that constitutes the crystal particles, are dissolved in an organic solvent;
> (II) a hydrolysis step in which water is added to the solution prepared in the dissolution step to perform hydrolysis of a precursor in the solution to form crystal particles; and
> (III) a purification step in which the crystal particles obtained in the hydrolysis step are purified with an organic solvent.

In the production process of crystal particles, the hydrolysis is preferably performed by adding dropwise liquid water or a water-containing organic solvent to the solution.

## EFFECTS OF THE INVENTION

The dielectric-forming composition of the present invention can form a dielectric film having good dielectric properties even under mild conditions at 400°C or below. Accordingly, production of a dielectric film may be simplified and productivity may be drastically improved as compared with the conventional processes in which calcination for the crystallization must be performed at high temperatures in a heating furnace. Moreover, since the dielectric-forming composition can be crystallized at reduced temperatures, it can form a crystalline film having good dielectric properties on various kinds of low heat resistance substrates that have been unsuitable in the conventional sol-gel processing which requires high temperature crystallization.

Specifically, the dielectric-forming composition has a concentration of the metal species A of 1 mol% or less in the liquid phase. This concentration leads to a dielectric film having excellent dielectric properties and favorably low leakage current properties.

Furthermore, the dielectric-forming composition contains water in an amount of 1 wt% or less. This water concentration provides improved dispersion properties of the particles. Accordingly, the dielectric-forming composition can form a dielectric film free of white turbidity attributed to bad dispersion and having excellent dielectric properties.

The dielectric film of the present invention has a low dielectric loss, good dielectric properties and excellent leakage current properties, so that it is suitably used as a dielectric material in capacitors.

The process for producing a dielectric-forming composition of the present invention produces a dielectric-forming composition capable of forming a dielectric film with good dielectric properties even under mild conditions at 400°C or below.

The process for producing crystal particles of the present invention produces crystal particles that can form a dielectric film with good dielectric properties even under mild conditions at 400°C or below. The use of the crystal particles enables simplified production of a dielectric film and drastically improves productivity as compared with the conventional processes in which crystallization requires high temperature calcination in a heating furnace. Moreover, the crystal particles can be crystallized at lower temperatures, so that they can form a crystalline film having good dielectric properties on various kinds of low heat resistance substrates that have been unusable in the conventional sol-gel processing where crystallization must be performed at high temperatures.

## BRIEF DESCRIPTION OF THE DRAWINGS

Fig. 1 is a chart showing a particle size distribution of crystal particles obtained in Example 1;
Fig. 2 is an X-ray diffraction chart of the crystal particles obtained in Example 1;
Fig. 3 is a chart showing a particle size distribution of crystal particles obtained in Comparative Example 1;
Fig. 4 is an X-ray diffraction chart of the crystal particles obtained in Comparative Example 1;
Fig. 5 is a chart showing a particle size distribution of crystal particles obtained in Comparative Example 2;
Fig. 6 is an X-ray diffraction chart of the crystal particles obtained in Comparative Example 2;
Fig. 7 is a graph showing frequency dependences of the relative dielectric constant and dielectric loss of a dielectric film 1; and
Fig. 8 is a graph showing frequency dependences of the relative dielectric constant and dielectric loss of a dielectric film 3.

## PREFERRED EMBODIMENTS OF THE INVENTION

Hereinbelow, the present invention will be described in detail.

<Production process of crystal particles, dielectric-forming composition and process for producing the same>

The dielectric-forming composition according to the present invention comprises ABOx crystal particles 100 nm or less in mean particle diameter and an organic solvent. The ABOx crystal particles comprise one or more metal species A selected from Li, Na, Ca, Sr, Ba and La, and one or more metal species B selected from Ti, Zr, Ta and Nb. The dielectric-forming composition satisfies at least one of the following conditions:

(i) the concentration of the metal species A in the liquid phase is 1 mol% or less; and
(ii) the composition contains water in a concentration of 1 wt% or less.

The dielectric-forming composition may be prepared by a process comprising a step (purification step) in which ABOx crystal particles (grit particles) 100 nm or less in mean particle diameter that contain the metal species A and B are purified with an organic solvent (a); and a step (dispersing step) in which the purified particles are separated from the organic solvent (a) and are dispersed in an organic solvent (b).

More specifically, the dielectric-forming composition of the invention may be prepared as described below.

First the following steps (I) and (II) are carried out:

(I) A dissolution step in which at least one kind selected from metal alkoxides, metal carboxylates and metal complexes, these having the metal species A that constitutes the ABOx crystal particles, and at least one kind selected from metal alkoxides, metal carboxylates and metal complexes, these having the metal species B that constitutes the ABOx crystal particles, are dissolved in an organic solvent.

(II) A hydrolysis step in which water is added to the solution prepared in the dissolution step and a precursor in the solution is hydrolyzed to yield crystal particles (grit particles), namely, ABOx crystal particles (grit particles) 100 nm or less in mean particle diameter.

Subsequently, the particles are subjected to:

(III) a purification step in which the crystal particles (grit particles) obtained in the hydrolysis step are purified with an organic solvent (a); and
(IV) a dispersing step in which the purified particles are separated from the organic solvent (a) and are dispersed in an organic solvent (b).

Generally, the production process of crystal particles according to the present invention includes the above steps (I) to (III).

That is, the process for producing ABOx crystal particles 100 nm or less in mean particle diameter according to the present invention comprises:

(I) a dissolution step in which at least one kind selected from metal alkoxides, metal carboxylates and metal complexes, these having the metal species A that constitutes the crystal particles, and at least one kind selected from metal alkoxides, metal carboxylates and metal complexes, these having the metal species B that constitutes the crystal particles, are dissolved in an organic solvent;
(II) a hydrolysis step in which water is added to the solution prepared in the dissolution step to perform hydrolysis of a precursor in the solution to form crystal particles (grit particles); and
(III) a purification step in which the crystal particles (grit particles) obtained in the hydrolysis step are purified with an organic solvent, namely, the organic solvent (a).

A detailed explanation will be given below.

In the present invention, it is preferable that the metal species A that constitutes the ABOx crystal particles is at least one metal selected from Li, Na, Ca, Sr, Ba and La, and the metal species B is at least one metal selected from Ti, Zr, Ta and Nb. Particularly, the metal species A is preferably at least one metal selected from Sr and Ba, and the metal species B is preferably Ti.

In the dissolution step (I), at least one kind selected from metal alkoxides, metal carboxylates and metal complexes of metal species A, and at least one kind selected from metal alkoxides, metal carboxylates and metal complexes of metal species B are dissolved in an organic solvent by the common technique.

The solution thus prepared preferably contains the metal species A in a concentration of 0.1 to 2.0 mmol/g, preferably 0.4 to 1.5 mmol/g, and more preferably 0.5 to 1.0 mmol/g, and the metal species B in a concentration of 0.1 to 2.0 mmol/g, preferably 0.4 to 1.5 mmol/g, and more preferably 0.5 to 1.0 mmol/g.

Metal alkoxides

The metal alkoxides are compounds resulting from reaction of metal atoms and alcohols. They are represented by the following formula (1):

$$M^a(OR^1)_a \qquad (1)$$

wherein M is a metal selected from Li, Na, Ca, Sr, Ba, La, Ti, Zr, Ta and Nb; a is an integer ranging from 1 to 7 depending on the valence of the metal M; and $R^1$ is a residue occurring by elimination of an OH group from the alcohol.

Preferred examples of the alcohols for the metal alkoxides include those having the formula (2):

$$R^1OH \qquad (2)$$

wherein $R^1$ is a saturated or unsaturated hydrocarbon group of 1 to 6 carbon atoms, or an alkoxyl-substituted hydrocarbon group of 1 to 6 carbon atoms.

The alcohols of the formula (2) in which $R^1$ is a saturated or unsaturated hydrocarbon group of 1 to 6 carbon atoms include methanol, ethanol, 1-propanol, 2-propanol, butanol, amylalcohol and cyclohexanol.

The alcohols of the formula (2) in which $R^1$ is an alkoxyl-substituted hydrocarbon group of 1 to 6 carbon atoms include methoxy methanol, methoxy ethanol, ethoxy methanol, ethoxy ethanol, methoxy propanol, ethoxy propanol and propoxy propanol.

Specific examples of the preferred metal alkoxides represented by the formula (1) include barium alkoxides such as barium dimethoxide, barium diethoxide, barium dipropoxide, barium diisopropoxide, barium dibutoxide and barium diisobutoxide; strontium alkoxides such as strontium dimethoxide, strontium diethoxide, strontium dipropoxide, strontium diisopropoxide, strontium dibutoxide and strontium diisobutoxide; and titanium alkoxides such as titanium tetramethoxide, titanium tetraethoxide, titanium tetrapropoxide, titanium tetraisopropoxide, titanium tetrabutoxide and titanium tetraisobutoxide.

Metal carboxylates

The metal carboxylates are compounds resulting from reaction of metal atoms and carboxylic acids. They are represented by the following formula (3):

$$M^A(OCOR^2)_a \qquad (3)$$

wherein M is a metal selected from Li, Na, Ca, Sr, Ba, La, Ti, Zr, Ta and Nb; a is an integer ranging from 1 to 7 depending on the valence of the metal M; and $R^2$ is a residue occurring by elimination of a COOH group from the carboxylic acid.

Preferred examples of the carboxylic acids for the metal carboxylates include those having the formula (4):

$$R^2COOH \qquad (4)$$

wherein $R^2$ is a saturated or unsaturated hydrocarbon group of 1 to 10 carbon atoms.

The carboxylic acids of the formula (4) include acetic acid, propionic acid, 2-methylpropionic acid, pentanoic acid, 2,2-dimethylpropionic acid, butanoic acid, hexanoic acid, 2-ethylhexanoic acid, octanoic acid, nonanoic acid and decanoic acid.

Specific examples of the preferred metal carboxylates represented by the formula (3) include barium carboxylates such as barium acetate, barium propionate, barium 2-methylpropionate, barium pentanoate, barium 2,2-dimethylpropionate, barium butanoate, barium hexanoate, barium 2-ethylhexanoate, barium octanoate, barium nonanoate and barium decanoate; and strontium carboxylates such as strontium acetate, strontium propionate, strontium 2-methylpropionate, strontium pentanoate, strontium 2,2-dimethylpropionate, strontium butanoate, strontium hexanoate, strontium 2-ethylhexanoate, strontium octanoate, strontium nonanoate and strontium decanoate.

Metal complexes

The metal complexes are coordination compounds formed between metal atoms and organic compounds, and are represented by the following formula (5):

$$M^a(OR^1)_b(OCOR^2)_cR^3_d \qquad (5)$$

wherein M is a metal selected from Li, Na, Ca, Sr, Ba, La, Ti, Zr, Ta and Nb; a is an integer ranging from 1 to 7 depending on the valence of the metal M; b is an integer ranging from 0 to 7; c is an integer ranging from 0 to 7; a = b + c; d is an integer ranging from 1 to 7; $R^1$ is a residue occurring by elimination of an OH group from the alcohol; $R^2$ is a residue occurring by elimination of a COOH group from the carboxylic acid; and $R^3$ is an organic compound.

Examples of the organic compounds $R^3$ coordinating to the metal atom include ethers, for example compounds represented by the following formulae (6-1) and (6-2):

$$R^4(OR^5)_m \qquad (6-1)$$

wherein $R^9$ and $R^5$ are each a saturated or unsaturated hydrocarbon group of 1 to 10 carbon atoms, and m is an integer ranging from 1 to 4;

$$(R^6O)_n \qquad (6-2)$$

wherein $R^6$ is an alkylene group of 1 to 10 carbon atoms, and n is an integer of 1 to 3.

Specific examples of the ethers include methylal, diethylether, dipropylether, diisopropylether, dibutylether, diamylether, diethylacetal, dihexylether, tetrahydrofuran, tetrahydropyran, trioxane and dioxane.

Further examples of the organic compounds $R^3$ coordinating to the metal atom include ketones, for example compounds represented by the following formulae (7) and (8):

$$R^7R^8C=O \qquad (7)$$

$$R^7(C=O)(CH_2)_x(C=O)R^8 \qquad (8)$$

wherein $R^7$ and $R^8$ are each a saturated or unsaturated hydrocarbon group of 1 to 10 carbon atoms that may be substituted with a hydroxyl group, and x is an integer ranging from 1 to 10.

Specific examples of the ketones include acetone, methyl ethyl ketone, methyl propyl ketone, methyl isobutyl ketone, methyl amyl ketone, methyl cyclohexyl ketone, diethyl ketone, ethyl butyl ketone, trimethyl nonanone, acetonylacetone, dimethyl oxide, phorone, cyclohexanone, diacetone alcohol and acetylacetone.

Still further examples of the organic compounds $R^3$ coordinating to the metal atom include esters, for example compounds represented by the following formulae (9-1) and (9-2):

$$R^9(COOR^{10})_y \qquad (9\text{-}1)$$

wherein $R^9$ is hydrogen or a saturated or unsaturated hydrocarbon group of 1 to 10 carbon atoms that may be substituted with an oxygen atom, a hydroxyl group or an acyl group, $R^{10}$ is a saturated or unsaturated hydrocarbon group of 1 to 10 carbon atoms that may be substituted with an alkoxyl group, and y is an integer ranging from 1 to 2;

$$(COOR^{11})_2 \qquad (9\text{-}2)$$

wherein $R^{11}$ is a saturated or unsaturated hydrocarbon group of 1 to 10 carbon atoms.

Specific examples of the esters include ethyl formate, methyl acetate, ethyl acetate, butyl acetate, cyclohexyl acetate, methyl propionate, ethyl butyrate, ethyl oxyisobutyrate, ethyl acetoacetate, ethyl lactate, methoxybutyl acetate, diethyl oxalate and diethyl malonate.

Exemplary metal complexes having the formula (5) include titanium allylacetoacetatotriisopropoxide, titanium dibutoxido(bis-2,4-pentanedionate), titanium diisopropoxido(bis-2, 4-pentanedionate), titanium dibutoxidobis(tetramethyl heptanedionate), titanium diisopropoxidobis(tetramethyl heptanedionate), titanium dibutoxidobis(ethyl acetoacetate) and titanium diisopropoxidobis(ethyl acetoacetate).

Organic solvents

The organic solvents employable for dissolving the metal alkoxides, metal carboxylates and metal complexes include alcohol solvents, polyhydric alcohol solvents, ether solvents, ketone solvents and ester solvents.

The alcohol solvents include methanol, ethanol, propanol, butanol, amylalcohol, cyclohexanol and methylcyclohexanol.

The polyhydric alcohol solvents include ethylene glycol monomethyl ether, ethylene glycol monoacetate, diethylene glycol monomethyl ether, diethylene glycol monoacetate, propylene glycol monoethyl ether, propylene glycol monoacetate, dipropylene glycol monoethyl ether, propylene glycol monomethyl ether, propylene glycol monopropyl ether, methoxybutanol, propylene glycol monoethyl ether acetate, propylene glycol monomethyl ether acetate, dipropylene glycol propyl ether and dipropylene glycol monobutyl ether.

The ether solvents include methylal, diethylether, dipropylether, dibutylether, diamylether, diethylacetal, dihexylether, trioxane and dioxane.

The ketone solvents include acetone, methyl ethyl ketone, methyl propyl ketone, methyl isobutyl ketone, methyl amyl ketone, methyl cyclohexyl ketone, diethyl ketone, ethyl butyl ketone, trimethyl nonanone, acetonylacetone, dimethyl oxide, phorone, cyclohexanone and diacetone alcohol.

The ester solvents include ethyl formate, methyl acetate, ethyl acetate, butyl acetate, cyclohexyl acetate, methyl propionate, ethyl butyrate, ethyl oxyisobutyrate, ethyl acetoacetate, ethyl lactate, methoxybutyl acetate, diethyl oxalate and diethyl malonate.

The solvents may be used singly or in combination of two or more kinds.

In the hydrolysis step (II), water is added to the solution prepared in the dissolution step (I) to carry out hydrolysis of a precursor in the solution, followed by crystallization.

From the viewpoint of reaction efficiency, the hydrolysis is desirably performed such that the solution obtained in the dissolution step (I) is temperature controlled at -78 to 200°C, preferably -20 to 100°C, and more preferably 0 to 50°C. When the hydrolysis is carried out while temperature controlling the solution within the above range, particles formed by the crystallization have higher crystallinity.

In the hydrolysis, water is desirably added in an amount 5 to 300 times, preferably 10 to 200 times, and more preferably 20 to 100 times greater than 1 mol of the metal species A. When water is added in this amount, the particles obtained have higher crystallinity and excellent dispersion properties. The water amount above or below this range may lead to lowered crystallinity of the resultant particles.

When the thus-prepared particles (grit particles) having higher crystallinity are purified and dispersed in an organic solvent, a dielectric-forming composition may be obtained which is capable of forming a uniform dielectric film excellent in dielectric properties.

In carrying out the hydrolysis step, water may be added to the solution singly or in combination with one or more kinds of the organic solvents described above. Preferably, the hydrolysis is carried out by adding dropwise liquid water or the organic solvent(s) containing liquid water to the solution.

The hydrolysis may be performed efficiently and with good reproducibility when carried out by dropwise addition of the hydrolysis water, that is, liquid water or the organic solvent(s) containing liquid water to the solution.

The hydrolysis water may contain a catalyst. Suitable catalysts include acid catalysts such as inorganic acids (e.g., hydrochloric acid, sulfuric acid and nitric acid) and organic acids (e.g., acetic acid, propionic acid, butyric acid and maleic acid) ; and inorganic or organic alkaline catalysts such as sodium hydroxide, potassium hydroxide, barium hydroxide, ammonia, monoethanolamine, diethanolamine and tetramethylammonium hydroxide.

Of these, the alkaline catalysts are preferred. The organic acids such as carboxylic acids are decomposed to generate carbon dioxide which may remain in the resultant dielectric film to cause adverse effects on electric properties. On the other hand, when the inorganic acids such as hydrochloric acid and nitric acid are used, part of the acid component may remain in the film to deteriorate its leakage current properties.

After the hydrolysis water has been added, the hydrolysis and condensation product formed is desirably maintained at temperatures of -10 to 200°C, preferably 20 to 150°C, and more preferably 30 to 100°C, for a period of 0.5 to 200 hours, preferably 1 to 100 hours, and more preferably 3 to 20 hours.

After the dissolution step (I) and the hydrolysis step (II), ABOx crystal particles (grit particles) result which have a mean particle diameter of 100 nm or less, and preferably from 20 to 80 nm.

Subsequently, the particles are subjected to a purification step (III) in which they are purified with an organic solvent (a).

The crystal particles (grit particles) obtained as described above by crystallizing the hydrolysis and condensation product contains impurities such as unreacted metal alkoxides, metal carboxylates and metal complexes (hereinafter, organometallic compounds), partially hydrolyzed organometallic compounds, metal hydroxides occurring by complete hydrolysis of the organometallic compounds, and metal ions.

In particular, when such crystal particles are directly dispersed in an organic solvent and the resulting composition has a higher than 1 mol% concentration of the metal species A in the liquid phase, the composition may give a dielectric film having problems such as:

(1) the dielectric film shows ion conductivity to increase leakage current; and
(2) the dielectric film has a high dielectric loss.
Furthermore, the crystal particles (grit particles) contains a large quantity of water. In particular, when such crystal particles are directly dispersed in an organic solvent and the resulting composition has a water concentration higher than 1 wt%, problems may be encountered such as:
(3) the ABOx crystal particles have deteriorated dispersion properties.

Bad dispersion properties cause the particles in the composition to have an increased mean particle diameter, possibly resulting in sedimentation and white turbidity in the film.

In order to obtain a dielectric-forming composition capable of forming a satisfactory dielectric film and to obtain crystal particles used in the composition, the crystal particles (grit particles) prepared in the hydrolysis step (II) shall be purified with an organic solvent (a) in the purification step (III). The particles purified in the purification step (III) may be separated from the washings, namely, the organic solvent (a) , and may be dispersed in a fresh organic solvent (b) in the dispersing step (IV) to give a composition. In the composition, it is important that the metal species A concentration in the liquid phase has been reduced to not more than 1 mol%, and preferably to not more than 0.5 mol%. It is also important that the water concentration in the composition has been lowered to not more than 1 wt%, and preferably to 0.05 to 0.5 wt%.

That is, in a particularly preferred embodiment of the present invention the liquid phase of the composition has a metal species A concentration reduced to not more than 1 mol%, and preferably to not more than 0.5 mol%, and the water concentration in the composition is not more than 1 wt%, and preferably from 0.05 to 0.5 wt%.

The metal species A concentration in the liquid phase of the composition may be calculated as described above based on the data obtained by an inductively coupled plasma mass spectrometer (ICP-MS) in which a specimen in the form of a fine mist is introduced in high temperature argon plasma to ionize the elements and the ions are subjected to separation analysis according to mass. The water concentration in the composition may be determined by Karl Fischer coulometric titration.

The purification step (III) has no limitation as to the method for purifying the crystal particles (grit particles) with an organic solvent with the proviso that the particles and the organic solvent (a) may be separated after the purification. For example, the impurities and water may be reduced to achieve the low concentrations by repeating two to five times a series of steps in which the organic solvent (a) is added to the particles, the particles are sedimented by decantation or centrifugal separation followed by removal of the supernatant liquid, and a fresh organic solvent (a) is added to the sedimented particles and the mixture is heated. Alternatively, the concentrations of the impurities and water may be reduced by repeating two to five times a process in which the organic solvent (a) is added to the particles and the mixture is subjected to dialysis using a semipermeable membrane.

When the thus-purified crystal particles are dispersed in an organic solvent (b) to give a composition, the metal species A in the liquid phase and water have concentrations reduced to fall in the aforesaid ranges. Accordingly, the aforesaid problems (1) to (3) are overcome.

Concerning the problem (3) in particular, since the purification step achieves reduced water content in the crystal particles, the dispersion of the purified crystal particles in an organic solvent (b) has a reduced water concentration. Consequently, the particles in the composition exhibit higher dispersion properties and are not aggregated to prevent particle size growth. Therefore, the mean particle diameter of the crystal particles in the composition may be 100 nm or less, and preferably from 20 to 80 nm.

The organic solvents (a) for use in the purification step (III) include alcohol solvents, polyhydric alcohol

15 EP 1 513 165 A1 16

solvents, ether solvents, ketone solvents and ester solvents.

The alcohol solvents include methanol, ethanol, propanol, butanol, amylalcohol, cyclohexanol and methylcyclohexanol.

The polyhydric alcohol solvents include ethylene glycol monomethyl ether, ethylene glycol monoacetate, diethylene glycol monomethyl ether, diethylene glycol monoacetate, propylene glycol monoethyl ether, propylene glycol monoacetate, dipropylene glycol monoethyl ether, propylene glycol monomethyl ether, propylene glycol monopropyl ether, methoxybutanol, propylene glycol monoethyl ether acetate, propylene glycol monomethyl ether acetate, dipropylene glycol propyl ether and dipropylene glycol monobutyl ether.

The ether solvents include methylal, diethylether, dipropylether, dibutylether, diamylether, diethylacetal, dihexylether, trioxane and dioxane.

The ketone solvents include acetone, methyl ethyl ketone, methyl propyl ketone, methyl isobutyl ketone, methyl amyl ketone, methyl cyclohexyl ketone, diethyl ketone, ethyl butyl ketone, trimethyl nonanone, acetonylacetone, dimethyl oxide, phorone, cyclohexanone and diacetone alcohol.

The ester solvents include ethyl formate, methyl acetate, ethyl acetate, butyl acetate, cyclohexyl acetate, methyl propionate, ethyl butyrate, ethyl oxyisobutyrate, ethyl acetoacetate, ethyl lactate, methoxybutyl acetate, diethyl oxalate and diethyl malonate.

The solvents may be used singly or in combination of two or more kinds.

Eventually the dispersing step (IV) is performed in which the purified particles are separated from the organic solvent (a) and are dispersed in an organic solvent (b) to yield the dielectric-forming composition of the invention.

There is no limitation as to the method for dispersing the purified particles in the organic solvent as long as the particles may be uniformly dispersed in the organic solvent. Exemplary dispersing methods include mechanical stirring and ultrasonic stirring.

Examples of the organic solvents (b) include the same alcohol solvents, polyhydric alcohol solvents, ether solvents, ketone solvents and ester solvents as listed as the organic solvents (a) for use in the purification step (III).

These solvents may be used singly or in combination of two or more kinds. The organic solvent (b) used in the dispersing may be the same as or different from the organic solvent (a) used in the purification.

In view of stability of the dielectric-forming composition, the composition contains the crystal particles in a solid concentration of 1 to 20 wt%, and preferably 3 to 15 wt%.

To ease dispersion of the purified crystal particles when they are dispersed in the organic solvent (b), a nonionic surfactant may be added as dispersant. Exemplary dispersants include polyoxyethylene polyoxypropylene glycol, ethylene diamine-polyoxypropylene polyoxyethylene condensate (Pluronic type), polyethyleneimine, polyvinylpyrrolidone and perfluoroalkyl-containing oligomers.

The kind and amount of the dispersant may be selected appropriately depending on the types of the crystal particles and the solvent (b) in which they are dispersed. In view of dielectric properties of the resultant dielectric film, the dispersant is desirably added in an amount of 0.001 to 10 g, preferably 0.005 to 3 g, and more preferably 0.01 to 1 g per 100 g of the particles.

<Dielectric film and Capacitor>

The dielectric film according to the present invention is prepared by applying the aforesaid dielectric-forming composition on a substrate to form a coating film on the substrate optionally followed by drying, and preferably further followed by calcination.

Detailed explanation will be given below. First, the dielectric-forming composition is applied to a substrate and a coating film is formed on the substrate. Herein, common application methods may be employed, including open spin coating, closed spin coating, LSM-CVD (liquid source misted chemical vapor deposition), dip coating, spray coating, roll coating, printing, ink jet printing and electrophoretic deposition.

Drying of the coating film is generally carried out at 50 to 300°C, and preferably 100 to 250°C.

A desired thickness of the dielectric film may be achieved by repeating several times the application of the dielectric-forming composition to the substrate and optional drying.

Subsequently, the coating film is heated at temperatures from above 300°C to not more than 900°C, preferably from 400°C to 750°C, and thereby the film is calcined to give a dielectric film. That is, the dielectric-forming composition of the present invention may be calcined to provide a practical dielectric film at relatively lower temperatures, for example 400°C or below, as well as at high temperatures as conventional.

The substrate on which the dielectric-forming composition is applied may be have a plan or uneven (for example unlevel) surface, and is not particularly limited as long as a desired coverage may be achieved. The substrate form may be, although not particularly limited to, a bulk, a thin plate or a film. Specific examples of the substrate materials include semiconductors, glass, metals, plastics and ceramics.

Silicone wafers are exemplary semiconductor substrates. The silicone wafers may have a silicon oxide film and an electrode formed thereon that comprises metals such as Pt, Ir and Ru or conductive metal oxides thereof. Further, semiconductor substrates made of compounds such as GaAs and InP are also employable.

The glass substrates include those made of quartz glass, borosilicate glass, soda glass, lead glass and lanthanum glass.

9

The metal substrates include those made of gold, silver, copper, nickel, aluminum, iron and stainless steel.

The plastic substrates include those comprising polyimides and methacrylic resins. Although the plastic substrates are often inferior in heat resistance to the glass and metal substrates, the present invention may employ the plastic substrates without problems since the calcination for the dielectric film (crystalline film) may be achieved at low temperatures.

The ceramic substrates include those made of silicon oxide, aluminum oxide, titanium oxide, silicon nitride, aluminum nitride, titanium nitride, silicon carbide and titanium carbide.

The dielectric film produced as described above has excellent dielectric properties and leakage current properties, so that it may be suitably used in electronic devices such as capacitors.

**EXAMPLES**

The present invention will be hereinafter described in greater detail by the following Examples, but it should be construed that the invention is in no way limited to those Examples.

Example 1

<Preparation of crystal particles 1 and dielectric-forming composition 1>

25. 77 g of Ba $(OCH_2CH_3)_2$ was dissolved in 25. 77 g of methyl cellosolve, followed by heating at 110°C for 1 hour. The resultant solution was combined with 32.21 g of Ti $(OCH (CH_3)_2)_4$ and the mixture was heated at 110°C for 1 hour. To the thus-prepared dark brown solution, 58 g of methanol was added to form a raw material solution having a Ba concentration of 0.8 mmol/g and a Ti concentration of 0.8 mmol/g.

40 g of the raw material solution was cooled to 0°C and was combined with a mixed solution consisting of 34.56 g water and 24 g methanol (corresponding to 60 times the Ba moles) . The mixture was then vigorously stirred, and a hydrolysis and condensation product resulted. The hydrolysis and condensation product was allowed to stand still at 60°C for 3 hours to carry out crystallization.

After the crystallization, the crystal particles (grit particles) were separated from the supernatant liquid by decantation. The separated particles were then combined with 120 g of methyl cellosolve and the mixture was allowed to stand still at 60°C for 3 hours. This procedure was repeated 4 times to obtain crystal particles 1.

Lastly, the crystal particles 1 were separated from the supernatant liquid and were combined with methyl cellosolve such that the solid concentration in terms of $BaTiO_3$ became 10 wt%, and were further combined with a dispersant (ethylene diamine-polyoxypropylene polyoxyethylene condensate) in an amount of 0.1 part by weight per 100 parts by weight of the particles. Subsequently, the crystal particles 1 were dispersed by an ultrasonic disperser to prepare a dielectric-forming composition 1.

The dielectric-forming composition 1 was analyzed by inductively coupled plasma mass spectrometry with use of inductively coupled plasma mass spectrometer ELAN DRC plus 6100 (Perkin Elmer) to determine the barium concentration in the liquid phase. The analysis provided 0.2 mol% Ba concentration.

Separately, the water concentration in the dielectric-forming composition 1 was measured by Karl Fischer coulometric titration with use of Hiranuma moisture content measuring device AQ-7 (HIRANUMA SANGYO Co., Ltd.). The analysis gave 0.4 wt% water concentration.

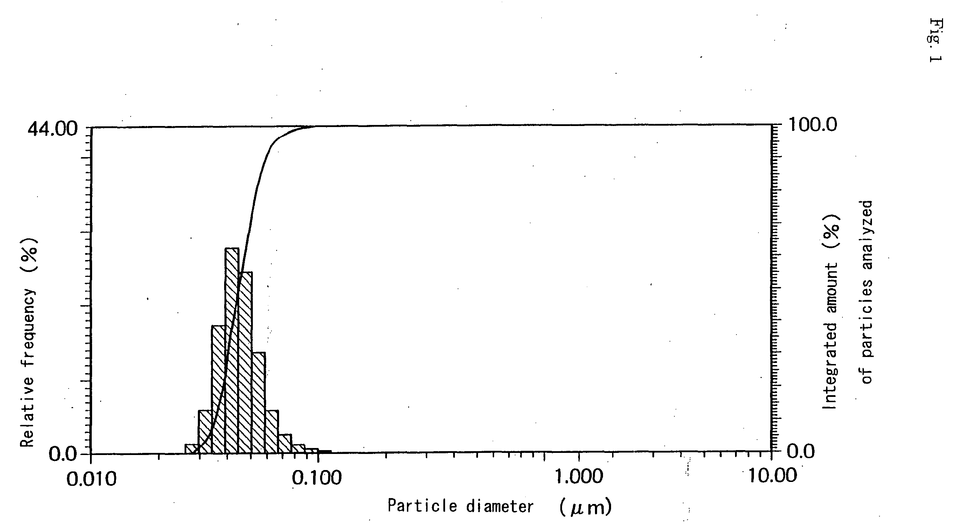

Further, the dielectric-forming composition 1 was analyzed by a dynamic scattering method with use of dynamic light scattering particle size distribution measurement equipment LB-500 (HORIBA, Ltd.) to obtain a particle size distribution. The results are set forth in Fig. 1. As shown in the figure, the particle diameters mainly distributed around 40 nm (mean particle diameter: about 40 nm). The dielectric-forming composition 1 could be easily filtered through a 200 nm pore filter to remove coarse particles.

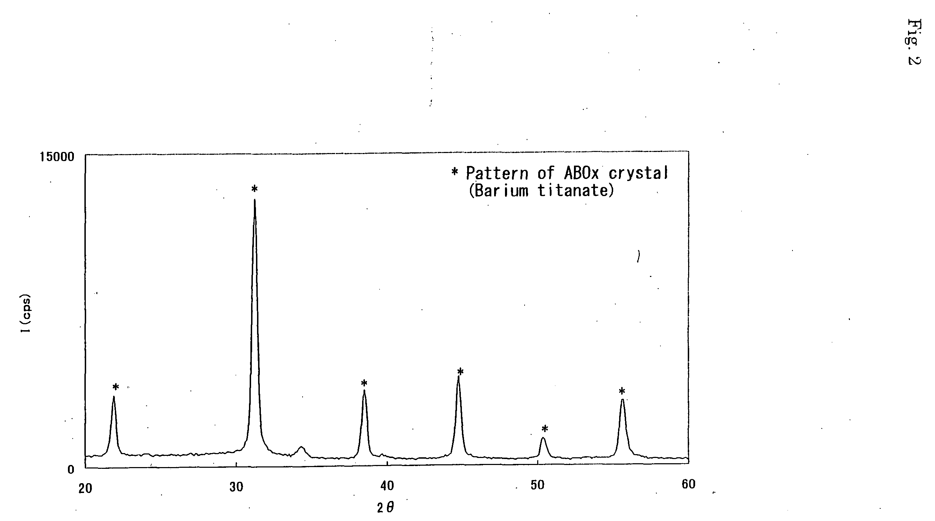

The dielectric-forming composition 1 was dropped on a glass plate and dried at room temperature. The dried product was analyzed by X-ray diffractometry. The X-ray diffraction chart recorded is given in Fig. 2. Fig. 2 indicates that the crystal particles 1 in the dielectric-forming composition 1 at room temperature have an ABOx crystal structure, namely, $BaTiO_3$ complex oxide crystal structure.

Comparative Example 1

<Preparation of crystal particles 2 and dielectric-forming composition 2>

25.77 g of Ba $(OCH_2CH_3)_2$ was dissolved in 25.77 g of methyl cellosolve, followed by heating at 110°C for 1 hour. The resultant solution was combined with 32.21 g of Ti $(OCH(CH_3)_2)_4$ and the mixture was heated at 110°C for 1 hour. To the thus-prepared dark brown solution, 58 g of methanol was added to form a raw material solution having a Ba concentration of 0.8 mmol/g and a Ti concentration of 0.8 mmol/g.

40 g of the raw material solution was cooled to 0°C and was combined with a mixed solution consisting of 34.56 g water and 24 g methanol (corresponding to 60 times the Ba moles). The mixture was then vigorously stirred, and a hydrolysis and condensation product resulted. The hydrolysis and condensation product was allowed to stand still at 60°C for 3 hours to carry out crystallization, thereby producing crystal particles 2.

After the crystallization, the reaction liquid containing the crystal particles 2 was combined with methyl cellosolve such that the solid concentration in terms of $BaTiO_3$ became 5 wt%. Subsequently, the crystal particles 2 were dispersed by an ultrasonic disperser to prepare a dielectric-forming composition 2.

The water concentration in the dielectric-forming composition 2 was measured by Karl Fischer coulometric titration with use of Hiranuma moisture content measuring device AQ-7 (HIRANUMA SANGYO Co., Ltd.). The measurement resulted in 20 wt% water concentration.

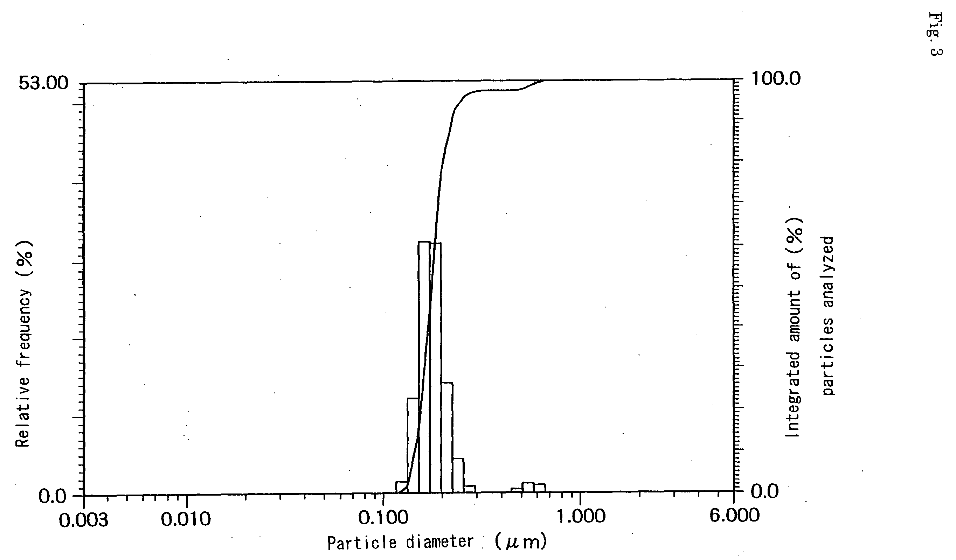

Further, the dielectric-forming composition 2 was analyzed by a dynamic scattering method with use of dynamic light scattering particle size distribution measurement equipment LB-500 (HORIBA, Ltd.) to obtain a particle size distribution. The results are set forth in Fig. 3. As shown in the figure, the particle diameters mainly distributed around 180 nm (mean particle diameter: about 180 nm). That is, deteriorated dispersion properties resulted. An attempt was made to filter the dielectric-forming composition 2 through a 200 nm pore filter. However, the composition contained 200 nm or larger particles and could not be filtered due to clogging.

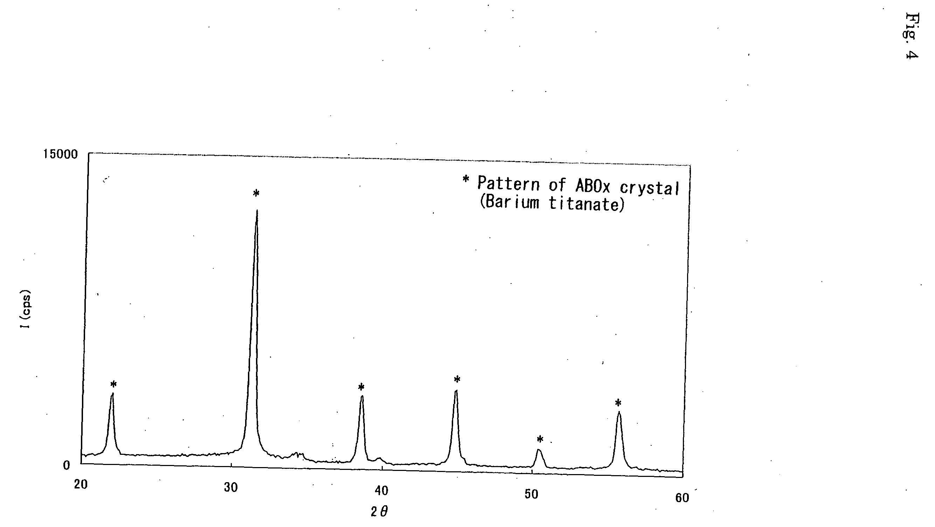

The dielectric-forming composition 2 was dropped on a glass plate and dried at room temperature. The dried product was analyzed by X-ray diffractometry. The X-ray diffraction chart recorded is given in Fig. 4. Fig. 4 indicates that the crystal particles 2 in the dielectric-forming composition 2 at room temperature have an ABOx crystal structure, namely, $BaTiO_3$ complex oxide crystal structure.

Comparative Example 2

<Preparation of crystal particles 3 and dielectric-forming composition 3>

25.77 g of Ba $(OCH_2CH_3)$ was dissolved in 25.77 g of methyl cellosolve, followed by heating at 110°C for 1 hour. The resultant solution was combined with 32.21 g of Ti $(OCH(CH_3)_2)_4$ and the mixture was heated at 110°C for 1 hour. To the thus-prepared dark brown solution, 58 g of methanol was added to form a raw material solution having a Ba concentration of 0.8 mmol/g and a Ti concentration of 0.8 mmol/g.

40 g of the raw material solution was cooled to 0°C and was combined with a mixed solution consisting of 34.56 g water and 24 g methanol (corresponding to 60 times the Ba moles). The mixture was then vigorously stirred, and a hydrolysis and condensation product resulted. The hydrolysis and condensation product was allowed to stand still at 60°C for 3 hours to carry out crystallization, thereby producing crystal particles 3.

After the crystallization, the reaction liquid containing the crystal particles 3 was combined with 100 g of ethanol. The mixture was concentrated by removing excess water by evaporation. The concentrate was then combined with methyl cellosolve such that the solid concentration in terms of $BaTiO_3$ became 5 wt%. Subsequently, the crystal particles 3 were dispersed by an ultrasonic disperser to prepare a dielectric-forming composition 3.

The dielectric-forming composition 3 was analyzed by inductively coupled plasma mass spectrometry with use of inductively coupled plasma mass spectrometer ELAN DRC plus 6100 (Perkin Elmer) to determine the barium concentration in the liquid phase. The analysis provided 2.7 mol% Ba concentration.

Separately, the water concentration in the dielectric-forming composition 3 was measured by Karl Fischer coulometric titration with use of Hiranuma moisture content measuring device AQ-7 (HIRANUMA SANGYO Co., Ltd.). The analysis gave 2.5 wt% water concentration.

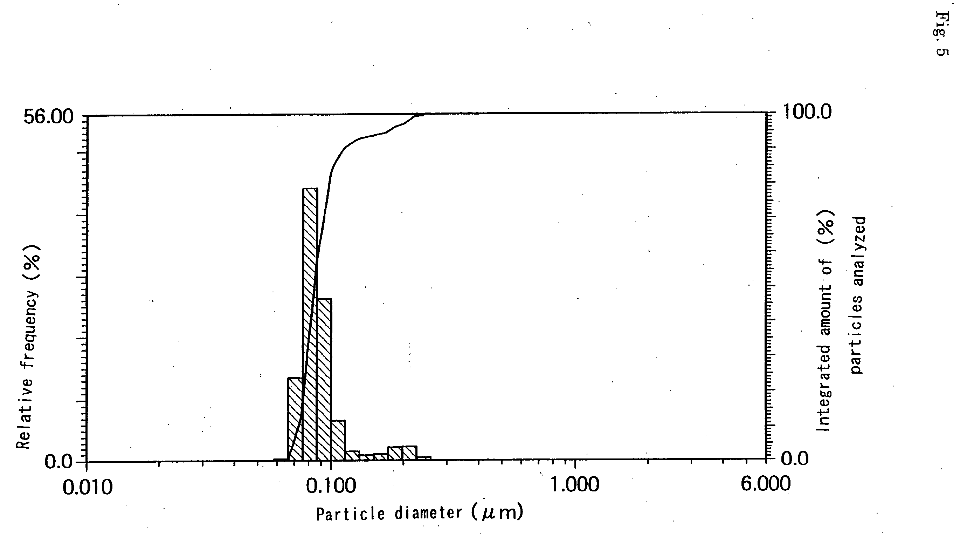

Further, the dielectric-forming composition 3 was analyzed by a dynamic scattering method with use of dynamic light scattering particle size distribution measurement equipment LB-500 (HORIBA, Ltd.) to obtain a particle size distribution. The results are set forth in Fig. 5. As shown in the figure, the particle diameters mainly distributed around 80 nm (mean particle diameter: about 80 nm). This proves that nonperformance of purification with the organic solvent leads to deteriorated dispersion properties of particles.

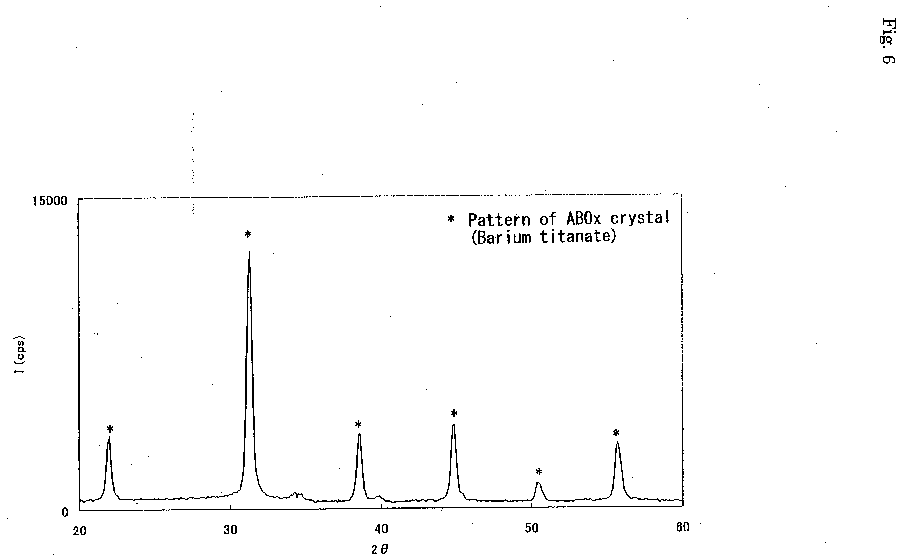

The dielectric-forming composition 3 was dropped on a glass plate and dried at room temperature. The dried product was analyzed by X-ray diffractometry. The X-ray diffraction chart recorded is given in Fig. 6. Fig. 6 indicates that the crystal particles 3 in the dielectric-forming composition 3 at room temperature have an ABOx crystal structure, namely, $BaTiO_3$ complex oxide crystal structure.

Example 2 and Comparative Examples 3 and 4

<Production of dielectric films using dielectric-forming compositions 1 to 3>

A silicon wafer in a diameter of 6 inch was prepared on which a 1000 nm thick silicon oxide layer had been formed by thermal oxidation. On the wafer, a Pt bottom electrode was sputtered in a thickness of 100 nm.

Thereafter, the dielectric-forming composition 1 prepared in Example 1 was spin coated on the bottom electrode at 300 rpm for 5 seconds and at 1000 rpm for 20 seconds, followed by drying at 250°C for 1 minute. This procedure was repeated 4 times. The resultant coating layer was calcined by being heated at 400°C for 10 minutes to give a 300 nm thick dielectric film 1 (Example 2).

Separately, a bottom electrode was formed in the same manner as described above, and the dielectric-forming composition 2 prepared in Comparative Example 1 was spin coated thereon at 300 rpm for 5 seconds and at 1000 rpm for 20 seconds, followed by drying at 250°C for 1 minute. This procedure was repeated 4 times. The resultant coating layer was calcined by being heated at 400°C for 10 minutes to give a 300 nm thick dielectric film 2 (Comparative Example 3).

Further, a bottom electrode was formed in the same manner as described above, and the dielectric-forming composition 3 prepared in Comparative Example 2 was spin coated thereon at 300 rpm for 5 seconds and at 1000 rpm for 20 seconds, followed by drying at 250°C for 1 minute. This procedure was repeated 4 times. The resultant coating layer was calcined by being heated at 400°C for 10 minutes to give a 300 nm thick dielectric film 3 (Comparative Example 4).

<Dielectric properties evaluation of dielectric films 1 to 3>

Each of the dielectric films 1 to 3 was covered with a metal mask, and a Pt top electrode was sputtered thereon in a diameter of 0.2 mm and a thickness of 200 nm.

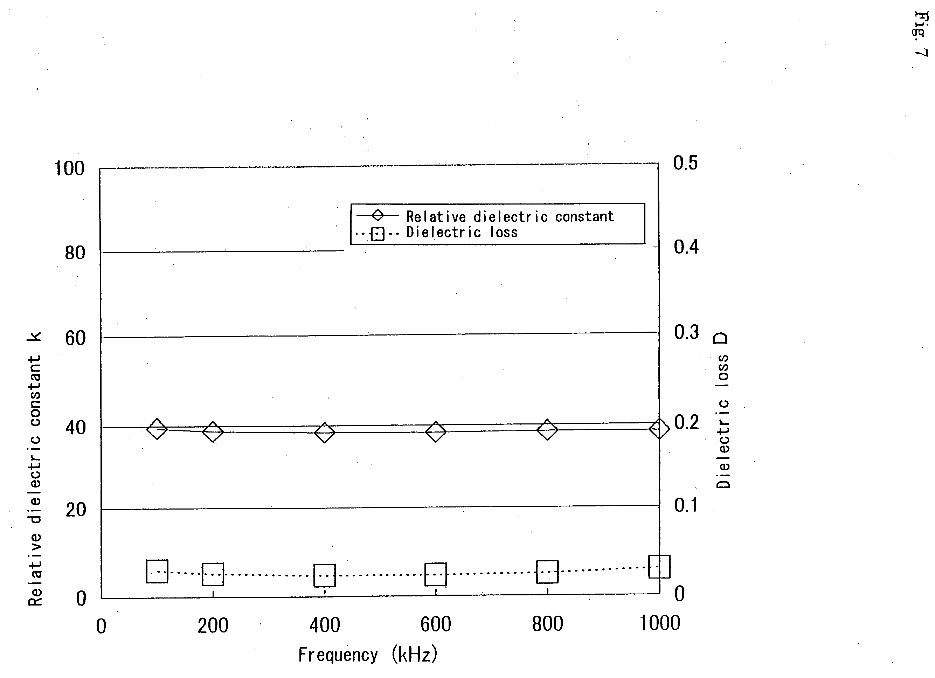

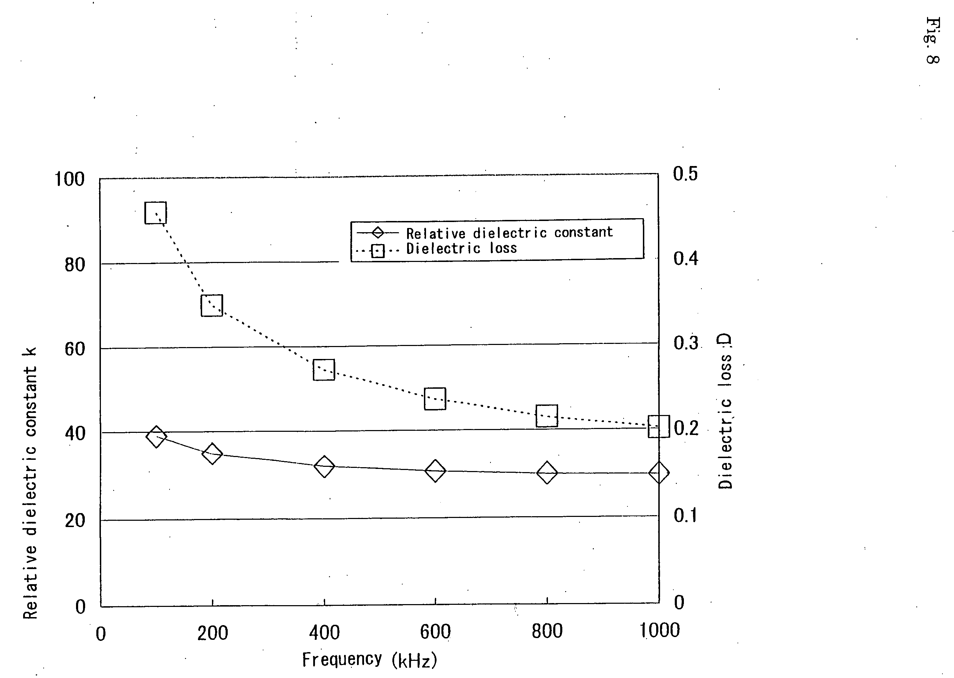

Figs. 7 and 8 show frequency dependences of the relative dielectric constant and dielectric loss of the dielectric films 1 and 3, respectively.

As illustrated in Fig. 7, the dielectric film 1 obtained with purification of the particles to reduce the barium concentration in the liquid phase to 0.2 mol%, has a relative dielectric constant of about 39 and a dielectric loss of 0.02 or below over a range of 100 kHz to 1 MHz. This indicates that the dielectric-forming composition 1 is capable of forming a dielectric film having good dielectric properties. On the other hand, as illustrated in Fig. 8, the dielectric film 3 produced from the composition 3 that had been prepared without purification of the particles and consequently had a 2.7 mol% barium concentration in the liquid phase, show varied properties depending on the frequency change, ranging in relative dielectric constant from 40 to 30 and in dielectric loss from 0.45 to 0.2 over a range of 100 kHz to 1 MHz.

Each of the above-prepared dielectric films was tested for leakage current. The test for the dielectric film 1 resulted in a favorable result of $2.7 \times 10^{-8}$ A/cm$^2$ at 0.2 MV/cm, indicating availability as a capacitor.

Meanwhile, the dielectric film 2 showed a leakage current above $1 \times 10^{-2}$ A/cm$^2$ at 0.2 MV/cm and proved to be unusable as a capacitor.

Further, the dielectric film 3 showed a leakage current of $2.6 \times 10^{-3}$ A/cm$^2$ at 0.2 MV/cm and proved to be unsuitable for use as a capacitor.

A dielectric-forming composition includes ABOx crystal particles 100 nm or less in mean particle diameter comprising specific metal species, and an organic solvent, and the composition satisfies at least one of the following conditions:

(i) the concentration of the metal species A in the liquid phase is 1 mol% or less; and

(ii) the water concentration in the composition is 1 wt% or less.

A process for producing ABOx crystal particles 100 nm or less in mean particle diameter comprising specific metal species, the process includes (I) a dissolution step in which a specific organometallic compound having the metal species A and a specific organometallic compound having the metal species B are dissolved in an organic solvent; (II) a hydrolysis step in which water is added to the solution prepared in the dissolution step to perform hydrolysis of a precursor in the solution to form crystal particles; and (III) a purification step in which the crystal particles obtained in the hydrolysis step are purified with an organic solvent.

**Claims**

1. A dielectric-forming composition comprising ABOx crystal particles 100 nm or less in mean particle diameter and an organic solvent, which particles comprise one or more metal species A selected from Li, Na, Ca, Sr, Ba and La, and one or more metal species B selected from Ti, Zr, Ta and Nb, the composition satisfying at least one of the following conditions:

(i) the concentration of the metal species A in the liquid phase is 1 mol% or less; and
(ii) the water concentration in the composition is 1 wt% or less.

2. The dielectric-forming composition according to claim 1, which satisfies the condition (i).

3. The dielectric-forming composition according to claim 1, which satisfies the condition (ii).

4. The dielectric-forming composition according to claim 1, which satisfies both the conditions (i) and (ii).

5. A dielectric film formed from the dielectric-forming composition as claimed in claim 1.

6. A capacitor including the dielectric film as claimed in claim 5.

7. A process for producing the dielectric-forming composition as claimed in claim 1, the process comprising the steps of:

purifying ABOx crystal particles 100 nm or less in mean particle diameter with an organic solvent (a) , which particles comprise one or more metal species A selected from Li, Na, Ca, Sr, Ba and La, and one or more metal species B selected from Ti, Zr, Ta and Nb; and separating the purified particles from the organic solvent (a) and dispersing the particles in an organic solvent (b).

8. The process according to claim 7, wherein a nonionic surfactant is added when the purified particles are dispersed in the organic solvent (b).

9. A process for producing ABOx crystal particles 100 nm or less in mean particle diameter comprising one or more metal species A selected from Li, Na, Ca, Sr, Ba and La, and one or more metal species B selected from Ti, Zr, Ta and Nb, the process comprising:

(I) a dissolution step in which at least one kind selected from metal alkoxides, metal carboxylates and metal complexes, these having the metal species A that constitutes the crystal particles, and at least one kind selected from metal alkoxides, metal carboxylates and metal complexes, these having the metal species B that constitutes the crystal particles, are dissolved in an organic solvent;

(II) a hydrolysis step in which water is added to the solution prepared in the dissolution step to perform hydrolysis of a precursor in the solution to form crystal particles; and

(III) a purification step in which the crystal particles obtained in the hydrolysis step are purified with an organic solvent.

10. The process according to claim 9, wherein the hydrolysis is performed by adding dropwise liquid water or a water-containing organic solvent to the solution.

Fig. 1

Fig. 2

EP 1 513 165 A1

* Pattern of ABOx crystal
  (Barium titanate)

Fig. 3

Fig. 4

* Pattern of ABOx crystal
(Barium titanate)

Fig. 5

Fig. 6

EP 1 513 165 A1

* Pattern of ABOx crystal
(Barium titanate)

$I$ (cps)

15000

0

20    30    40    50    60

$2\theta$

Fig. 7

EP 1 513 165 A1

Fig. 8

Dielectric loss D

Relative dielectric constant k

Frequency (kHz)

Relative dielectric constant
Dielectric loss

**European Patent Office**

## EUROPEAN SEARCH REPORT

Application Number

EP 04 02 0931

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | DATABASE WPI<br>Section Ch, Week 200324<br>Derwent Publications Ltd., London, GB;<br>Class E12, AN 2003-242569<br>XP002303168<br>-& JP 2002 275390 A (FUKUOKA KEN)<br>25 September 2002 (2002-09-25)<br>* abstract * | 1-10 | H01B3/12<br>H01G4/12<br>C04B35/468<br>C04B41/50<br>C01G23/00 |
| D,X | DATABASE WPI<br>Section Ch, Week 200119<br>Derwent Publications Ltd., London, GB;<br>Class L03, AN 2001-188138<br>XP002303169<br>-& JP 2001 026421 A (FUKUOKA KEN)<br>30 January 2001 (2001-01-30)<br>* abstract * | 1-6 | |
| X | EP 0 199 930 A (ALLIED CORP)<br>5 November 1986 (1986-11-05)<br>* page 10, line 35 - page 11, line 18;<br>example 12 * | 1-4,7,8 | TECHNICAL FIELDS SEARCHED (Int.Cl.7) |
| X | WO 03/027020 A (CABOT CORP)<br>3 April 2003 (2003-04-03)<br>* page 4, line 3 - line 9 *<br>example | 1-4 | H01B<br>H01G<br>C04B<br>C01G |
| X | WO 99/67189 A (CABOT CORP)<br>29 December 1999 (1999-12-29)<br>* page 15, line 3 - page 16, line 20 *<br>* page 20, line 1 - line 14 *<br>examples | 1-8 | |
| X | US 4 957 888 A (BRAND HANS-WOLFGANG ET AL) 18 September 1990 (1990-09-18)<br>* column 1, line 11 - line 15; example 5 * | 1-6 | |

-/--

The present search report has been drawn up for all claims

| Place of search | Date of completion of the search | Examiner |
|---|---|---|
| Munich | 29 October 2004 | Meiners, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 513 165 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HERRIG H ET AL: "Microemulsion Mediated Synthesis of Ternary and Quaternary Nanoscale Mixed Oxide Ceramic Powders" NANOSTRUCTURED MATERIALS, ELSEVIER, NEW YORK, NY, US, vol. 9, no. 1-8, 1997, pages 241-244, XP004205401 ISSN: 0965-9773 * the whole document * | 1-10 | |
| X | HEMPELMANN R ET AL: "A colloidal approach to nanometre-sized mixed oxide ceramic powders" MATERIALS LETTERS, NORTH HOLLAND PUBLISHING COMPANY. AMSTERDAM, NL, vol. 27, no. 6, 1 August 1996 (1996-08-01), pages 287-292, XP004078276 ISSN: 0167-577X * the whole document * | 1-10 | TECHNICAL FIELDS SEARCHED (Int.Cl.7) |

The present search report has been drawn up for all claims

| Place of search | Date of completion of the search | Examiner |
|---|---|---|
| Munich | 29 October 2004 | Meiners, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 513 165 A1**

## ANNEX TO THE EUROPEAN SEARCH REPORT
## ON EUROPEAN PATENT APPLICATION NO.

EP 04 02 0931

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2004

| Patent document cited in search report | | Publication date | Patent family member(s) | | Publication date |
|---|---|---|---|---|---|
| JP 2002275390 | A | 25-09-2002 | NONE | | |
| JP 2001026421 | A | 30-01-2001 | NONE | | |
| EP 0199930 | A | 05-11-1986 | US | 4649037 A | 10-03-1987 |
| | | | AU | 5494186 A | 02-10-1986 |
| | | | CA | 1237870 A1 | 14-06-1988 |
| | | | DE | 3682529 D1 | 02-01-1992 |
| | | | EP | 0199930 A2 | 05-11-1986 |
| | | | JP | 61232204 A | 16-10-1986 |
| | | | US | 4713233 A | 15-12-1987 |
| WO 03027020 | A | 03-04-2003 | WO | 03027020 A1 | 03-04-2003 |
| | | | US | 2003059366 A1 | 27-03-2003 |
| WO 9967189 | A | 29-12-1999 | AU | 4581299 A | 10-01-2000 |
| | | | BR | 9911406 A | 24-09-2002 |
| | | | CA | 2335927 A1 | 29-12-1999 |
| | | | CN | 1313842 T | 19-09-2001 |
| | | | EP | 1109758 A1 | 27-06-2001 |
| | | | JP | 2002518290 T | 25-06-2002 |
| | | | SI | 20526 A | 31-10-2001 |
| | | | TW | 552250 B | 11-09-2003 |
| | | | WO | 9967189 A1 | 29-12-1999 |
| US 4957888 | A | 18-09-1990 | DE | 3727396 A1 | 02-03-1989 |
| | | | DE | 3875864 D1 | 17-12-1992 |
| | | | EP | 0304128 A1 | 22-02-1989 |
| | | | JP | 1069520 A | 15-03-1989 |
| | | | JP | 2726439 B2 | 11-03-1998 |

EPO FORM P0459

For more details about this annex : see Official Journal of the European Patent Office, No. 12/82

24